# EUROPÄISCHE PATENTSCHRIFT

(11) **EP 4 471 413 B1**
(45) Veröffentlichungstag und Bekanntmachung des Hinweises auf die Patenterteilung: **18.03.2026**
(21) Anmeldenummer: 23176405.1
(22) Anmeldetag: 31.05.2023
(51) Int. Cl.: G01N 23/223

(54) **PRODUKTIONSLINIE MIT RÖNTGENFLUORESZENZMESSKOPF ZUR BESTIMMUNG EINER AUF MINDESTENS EIN TRÄGERMATERIAL AUFGETRAGENEN MENGE VON MINDESTENS EINEM PRIMER**
PRODUCTION LINE WITH X-RAY FLUORESCENCE MEASUREMENT HEAD FOR DETERMINING AN AMOUNT OF AT LEAST ONE PRIMER APPLIED TO AT LEAST ONE SUPPORT MATERIAL
CHAINE DE PRODUCTION AVEC UNE TÊTE DE MESURE PAR ANALYSE PAR FLUORESCENCE X POUR LA DÉTERMINATION D'UNE QUANTITÉ D'AU MOINS UNE AMORCE APPLIQUÉE SUR AU MOINS UN MATÉRIAU SUPPORT

(43) Veröffentlichungstag der Anmeldung: 04.12.2024
(73) Patentinhaber: SWISS KRONO Tec AG, 6004 Luzern (CH)
(72) Erfinder: Pfeiffer, Sabrina, 16866 Kyritz (DE); Kalwa, Norbert, 32805 Horn-Bad Meinberg (DE)
(74) Vertreter: Maikowski & Ninnemann Patentanwälte Partnerschaft mbB

(56) Entgegenhaltungen:
- EP-A2- 0 269 590
- CN-A- 109 506 602
- US-A1- 2017 329 244

## Beschreibung

Die vorliegende Erfindung betrifft eine Produktionslinie zum Auftragen einer Primerschicht auf ein Trägermaterial, welche für ein Verfahren zur Bestimmung der auf mindestens ein Trägermaterial aufgetragenen Menge von mindestens einem Primer unter Verwendung von Röntgenfluoreszenzanalyse ausgelegt ist. Die Nutzung von Röntgenfluoreszenzanalyse zur Bestimmung der Dicke einer Primerschicht auf einem Trägermaterial ist beispielsweise aus EP0269590 bekannt, worin beschrieben ist, die Dicke einer calciumcarbonathaltigen Klebebeschichtung auf einer Pappeprobe nach dem Trocknen mit Röntgenfluoreszenzmessung zu bestimmen.

Mit einem Dekor versehene Trägermaterialien, wie z.B. Holzwerkstoffplatten oder Papierlagen, werden hauptsächlich im Tiefdruckverfahren oder Digitaldruckverfahren bedruckt.

Das Tiefdruckverfahren ist eine Drucktechnik, bei der die abzubildenden Elemente als Vertiefungen in einer Druckform vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand wie z.B. ein Trägermaterial übertragen.

Beim Digitaldruck hingegen wird das Druckbild direkt von einem Computer in eine Druckmaschine wie z.B. einem Laserdrucker oder Tintenstrahldrucker übertragen. Dabei entfällt die Verwendung einer statischen Druckform.

Im Rahmen der technischen Weiterentwicklung der Drucktechnologie von verschiedensten Trägermaterialien wird zunehmend auf den Digitaldruck gesetzt. Während digitale Druckverfahren zunächst vor allem in der graphischen Industrie wie z.B. Werbeagenturen, Werbemittelhersteller oder Druckereien Anwendung fanden, zeigt sich mittlerweile, dass digitale Druckverfahren auch häufiger in anderen Industriezweigen anzutreffen sind. Hierfür gibt es zwar vielfältige Gründe, wobei sich jedoch zwei wesentliche Argumente erkennen lassen. So ermöglicht der Digitaldruck die Herstellung eines Druckbildes mit einer besonders hohen Qualität durch eine höhere Auflösung und erlaubt des Weiteren ein breiteres Anwendungsspektrum bei hoher Flexibilität. Dies verdeutlicht sich durch die Tatsache, dass keine Limitierung des Druckbildes im Hinblick auf die Länge mehr gegeben ist.

Wichtig bei allen Verfahren zum Bedrucken eines Mediums (hier Papier, ansonsten auch Holzwerkstoffplatten) ist, dass für den Kunden ein einheitliches und wiederholbares Druckbild entsteht, sowohl die Farben als auch die Formen müssen bei jedem Druck zum Urmuster passen. Abweichungen sind nicht erwünscht und werden nicht akzeptiert

Um ein Papier mit einer Digitaldrucktinte zu bedrucken, ist es also notwendig, dass das Papier vorher mit einer Zwischenschicht versehen wird. Ein Primer oder auch eine Vorgrundierung wird als eine Zwischenschicht genutzt, um Farbabweichungen zwischen den gedruckten Dekoren einer Produktionscharge bzw. auch zwischen identischen gedruckten Dekoren verschiedener Produktionschargen durch wegschlagende Pigmente von vornherein so gering wie möglich zu halten.

Der Primer hat dabei zwei Funktionen, zum einen bildet es eine Art Sperrschicht zwischen der Tinte und dem Papier, zum anderen hat dieser Primer eine reaktive Komponente, die mit der Tinte reagiert und so dafür sorgt, dass ein Tintentropfen, der eine bestimmte Größe haben soll, diese auch auf dem Papier nicht mehr verändert. Der Primer reagiert so mit der Tinte, dass ein Tropfen sofort zum Stehen kommt und nicht spreitet.

Darüber hinaus reduziert der Einsatz eines Primers die Menge der Tinte, die für einen Druck verwendet werden muss. Ohne Primer sackt die Tinte weit in das Papier ab und es muss eine größere Menge Tinte verwendet werden, um ein gewünschtes Druckergebnis zu erreichen. Da der Primer deutlich preiswerter ist als Drucktinte, ist mit dessen Verwendung eine deutliche Kostenersparnis verbunden.

Das zu bedruckende Papier wird in der Digitaldruckanlage mit einem Primer versehen. Dieser wird mittels einer Walze (Rasterwalze; möglich wäre auch ein Vorhang oder Aufsprühen des Primers) mit einem definierten Volumen Auftragsmenge auf eine Gummiwalze und dann auf das Papier aufgetragen. Im Anschluss wird der Primer getrocknet, bevor dann die Digitaldrucktinte aufgetragen und das Papier wieder getrocknet wird.

Daraus können sich verschiedene Nachteile ergeben.

Der Auftrag des Primers bzw. der Grundierung kann aufgrund verschiedener Einflüsse ungleichmäßig sein. Dies tritt z.B. bei (mechanischen) Beschädigungen an der Rasterwalze, (mechanischen) Beschädigungen an der Gummiwalze zur Übertragung des Primers, schiefes Einbauen einer der Walzen, Verschleiß der Walzen, Abnutzung und damit Veränderung der Näpfchentiefe und damit des Schöpfvolumens, Unzureichende Reinigung der Walzen und damit Veränderung der Näpfchentiefe und damit des Schöpfvolumens. Es kann auch eine Faltenbildung des Papiers für unterschiedliche Auftragsmengen verantwortlich sein.

Es entstehen hohe Kosten durch nicht verwertbaren Ausschuss, durch Wiederholung einer Produktion (Material, Personal), durch Reklamationen, durch zu hohen Materialeinsatz (Tinte, Primer).

Produktionszeiten erhöhen sich durch Wiederholung einer Produktion und/oder durch aufwendigen Walzenwechsel, weil eine einfache Reinigung nicht mehr ausreichend ist.

Des Weiteren werden Ressourcen im Material- und Personaleinsatz, durch doppelte Produktionen und Ausschuss und/oder durch zu hohe Tinten- und Primermengen verschwendet.

Der Erfindung liegt daher die technische Aufgabe zu Grunde, ein Messverfahren in einer Produktionslinie zu etablieren, mit dem der Primerauftrag sowohl über die Zeit, also die Laufmeter zu überwachen, als auch über die Bahnbreite zu kontrollieren. Durch die Kontrolle des Primerauftrages kann sichergestellt werden, dass es keine Abweichungen im Druckbild gibt.

Diese Aufgabe wird erfindungsgemäß durch eine Produktionslinie mit den Merkmalen des Anspruchs 1 gelöst.

Demnach wird eine Produktionslinie zum Auftragen einer Primerschicht auf ein Trägermaterial bereitgestellt, die ein Verfahren zur Bestimmung einer auf mindestens einem Trägermaterial aufgetragenen Menge von mindestens einem Primer unter Verwendung von Röntgenfluoreszenzanalyse ermöglicht, wobei die Produktionslinie umfasst:
- mindestens ein Auftragswerk zum Auftragen des Primers auf das mindestens eine Trägermaterial,
- mindestens einen Röntgenfluoreszenz-Messkopf zur Aufnahme von mindestens einem Röntgenfluoreszenzspektrum der auf das Trägermaterial aufgetragenen Primerschicht, wobei die emittierte Röntgenstrahlung Energie in einem Bereich zwischen 2000 und 6000 eV umfasst,
   - mindestens ein Steuerungssystem zur Steuerung der Produktionslinie, wobei das Steuerungssystem der Produktionslinie mindestens eine computergestützte Auswerteeinheit und eine Datenbank umfasst,
- wobei die Auswerteeinheit konfiguriert ist, das für das primerbeschichtete Trägermaterial gemessene Röntgenfluoreszenzspektrum mit einem erstellten Kalibriermodell abzugleichen;
- wobei die Datenbank konfiguriert ist, die so bestimmten Daten zu speichern,
   - wobei das Steuerungssystem konfiguriert ist, die bestimmten Daten zur Steuerung der Produktionslinie zu verwenden,
   - wobei die Auswerteeinheit konfiguriert ist das Kalibriermodell anhand von durch den Röntgenfluoreszenz-Messkopf zu vermessenen Referenzproben zu bestimmen.

Das Kalibriermodell wird wie folgt erstellt:
- Bereitstellen von mehreren Referenzproben durch Aufbringen von mindestens einem Primer in jeweils unterschiedlich quantitativ definierten Mengen auf das mindestens eine Trägermaterial;
- Aufnahme von mindestens einem Röntgenfluoreszenzspektrum von jeder der Referenzproben unter Verwendung von mindestens einem Röntgenfluoreszenz-Messkopf in einem für das in dem Primer enthaltende jeweils zu detektierende Element, bevorzugt zweiwertige Kation,
- Zuordnung der unterschiedlichen quantitativen definierten Mengen an Primer der Referenzproben zu den aufgenommenen Röntgenfluoreszenzspektren der genannten Referenzproben; und
- Erstellen eines Kalibriermodells für den Zusammenhang zwischen den aufgenommenen Röntgenfluoreszenzspektren der Referenzproben und den dazugehörigen quantitativ definierten Mengen an Primer.

Unter Verwendung des Kalibriermodells wird das Messverfahren wie folgt ausgeführt:
- Bereitstellen von mindestens einer zu vermessenden Probe durch Aufbringen von mindestens einer Schicht aus mindestens einem Primer auf das mindestens eine Trägermaterial,
- Aufnehmen von mindestens einem Röntgenfluoreszenzspektrum der zu vermessenden Probe unter Verwendung des mindestens einen Röntgenfluoreszenz-Messkopf,
- Bestimmen der quantitativen Menge des auf das Trägermaterial aufgebrachten Primers in der zu vermessenden Probe durch Vergleich des Röntgenfluoreszenzspektrums der zu vermessenden Probe mit dem aus den Referenzproben erstellten Kalibriermodell.

Mit der im vorliegenden Verfahren angewendeten Röntgenfluoreszenzanalyse ist es möglich, selbst geringe Auftragsmengen des Primers sicher zu bestimmen.

Die Röntgenfluoreszenzanalyse (RFA) oder Röntgenfluoreszenzspektroskopie (RFS) ist eine Methode aus der Materialanalytik und ist eine der am häufigsten eingesetzten Methoden zur qualitativen und quantitativen Bestimmung der elementaren Zusammensetzung einer Probe, da die Proben durch die Messung nicht zerstört werden und keine Aufschlüsse benötigt werden. Besonders breite Anwendung findet Röntgenfluoreszenzanalyse (RFA) in der metallverarbeitenden Industrie, bei der Untersuchung von Glas, Keramik und Baustoffen sowie bei der Analyse von Schmierstoffen und Mineralölprodukten.

Der große Vorteil der Röntgenfluoreszenz gegenüber anderen Messverfahren besteht darin, dass selbst geringste Auftragsmengen ( < 1 g/m² ) noch sicher bestimmt werden können. Dies ist bei dem Primerauftrag der Fall.

Durch das Einstrahlen bzw. Bestrahlen der Materialprobe mit Röntgenstrahlung werden zunächst die Elektronen des zu bestimmenden Elementes aus den inneren Bahnen der Elektronenhülle herausgeschlagen. Anschließend fallen Elektronen aus den äußeren Hüllen in diese Lücken zurück und geben dabei charakteristische Röntgenstrahlung ab. Diese ist für jedes Element spezifisch und erlaubt eine Bestimmung der Elementmenge. Die Detektion der elementspezifischen Röntgenstrahlung erfolgt durch einen geeigneten Strahlungsdetektor.

Das vorliegende Verfahren ermöglicht eine kontinuierliche berührungslose online Bestimmung der aufgetragenen Primermenge. Somit kann die aufgetragene Primermenge während der laufenden Produktion gemessen werden, sowohl über die Warenbahnbreite als auch über die Warenbahnlänge. Nur so können frühzeitig Abweichungen erkannt werden, die zu Problemen im Druck führen.

Bevor die Messtechnik in der Anlage genutzt werden kann, wird zunächst eine Kalibrierung anhand von Referenzproben vorgenommen werden, wobei zum einen unbeschichtetes Trägermaterial (wie z.B. ein unbehandeltes Rohpapier) als Null-Punkt eingemessen wird, zum anderen wird eine Kalibrierreihe mit unterschiedlichen Auftragsmengen des Primers auf das Trägermaterial erstellt. Es werden unterschiedliche bekannte Mengen an Primer auf das Trägermaterial aufgetragen und per RFA analysiert. Basierend auf den ermittelten Daten wird eine Ausgleichsgerade erstellt, auf deren Grundlage die Primermenge der zu vermessenden Proben bestimmt werden kann.

In einer Ausführungsform werden zum Zwecke der Kalibrierung als Referenzproben jeweils ein Primer mit unterschiedlichen Mengen an zweiwertigen Kation, wie z.B. Ca²⁺ aufgetragen, das Gesamtspektrum aufgenommen und die emittierte Strahlung in dem für das zweiwertige Kation spezifischen Bereich analysiert. Es ist auch möglich, die emittierte Strahlung für andere Elemente zu untersuchen.

Für die zu vermessenden Proben in einer Produktionsanlage wird hinter dem Primerauftragswerk und ggfs. hinter einem anschließenden Trockner ein Röntgenfluoreszenz-Messkopf installiert. Über die gemessene bzw. detektierte Röntgenstrahlung kann eine Aussage über die Konzentration des Primers in der zu vermessenden Probe machen. Im Idealfall sollte der Messwert konstant sein. Kommt es zu Abweichungen, bedeutet dies, dass die aktuellen Primerauftragsmengen nicht dem Soll entsprechen und dass es dadurch zu Abweichungen im Druckbild kommen kann.

Der Messkopf kann bei der Messung über die Warenbahn traversieren oder alternativ können auch mehrere Messköpfe über die Bahnbreite nebeneinander installiert werden, so kann der Primerauftrag über die Bahnbreite kontrolliert werden.

Gemeinsam haben alle Ausführungen, dass die Spektren kontinuierlich aufgenommen werden, um den Primerauftrag über die gesamte Zeit zu betrachten. So können frühzeitig Abweichungen erkannt und behoben werden.

Mit dem vorliegenden Verfahren kann sichergestellt werden, dass das aktuelle Ist-Druckbild dem hinterlegten Urmuster, also dem Soll-Druckbild entspricht. Es wird sichergestellt, dass die Anforderungen des Kunden erfüllt werden.

Es ergeben sich Kostenersparnisse durch rechtzeitiges Feststellen von Verschleiß der Walzen und deren Tausch, Vermeidung von Fehlproduktionen, optimalen Einsatz von Primer und Tinte und Zeitersparnisse durch Vermeiden von Fehlproduktionen und Vermeiden von großen Stillständen durch Defekte an den Auftragswalzen. Durch den optimalen Einsatz von Primer und Tinte und Vermeidung von Fehl- oder Doppelproduktionen werden zudem Ressourcen geschont.

Der vorliegend verwendete Primer umfasst als zu detektierendes Element mindestens ein Salz mit einem zweiwertigen Kation, insbesondere Mg²⁺, Ca²⁺, Sr²⁺, Ba²⁺, bevorzugt Ca²⁺. Besonders leistungsfähig ist die Röntgenfluoreszenzanalyse bei Elementen mit höheren Ordnungszahlen, wie Ca²⁺, Sr²⁺ oder Ba²⁺. Das zweiwertige Kation dient somit als Indikator für die aufgetragene Primermenge.

Die zweiwertigen Kationen werden als Salze verwendet, insbesondere in Form von Carbonaten, Sulfaten, Formiaten. Geeignete Salze sind Calciumdiformiat, Calciumcarbonat, Calciumchlorid, Magnesiumcarbonat, Bariumsulfat, Calciumsulfat.

Die Salze werden bevorzugt in wasserbasierenten Dispersionen verwendet, die vollständig mit Wasser mischbar oder in Wasser teilweise lösbar ist. Der Primer sollte einen niedrigen Lösungsmittelgehalt von unter 3 Gew%, bevorzugt weniger als 2 Gew% oder weniger als 1 Gew% aufweisen. Typische Lösungsmittel sind Ethan-1,2-diol (Glycol) oder Methanol.

Die Konzentration der zweiwertigen Kation Salze in der Primermischung bzw. Primerdispersion kann zwischen 5 und 25 Gew% , bevorzugt zwischen 10 und 20 Gew% betragen. So werden z.B. Primermischungen mit 5-10 Gew% Calciumdiformiat und 5-10 Gew% Methanol oder mit 10-20 Gew% Calciumchlorid und 0,1 -1 Gew% Methanol verwendet.

Weitere Bestandteile der Primermischung können polymere Bindemittel sein, wie z.B. das aus der Gruppe bestehend aus Hydroxyethylcellulose; Hydroxypropylcellulose; Hydroxyethylmethylcellulose; Hydroxypropylmethylcellulose; Hydroxybutylmethylcellulose; Methylcellulose; Natriumcarboxymethylcellulose; Natriumcarboxymethylhydroxethyl Cellulose; wasserlösliche Ethylhydroxyethylcellulose; Cellulosesulfat; Polyvinylalkohol; Vinylalkohol-Copolymere; Polyvinylacetat; Polyvinylacetal; Polyvinylpyrrolidon; Polyacrylamid; Acrylamid/Acrylsäure-Copolymer; Polystyrol, Styrol-Copolymere; Acryl- oder Methacryl-Polymere; Styrol/Acryl-Copolymere; Ethylen-Vinylacetat-Copolymer; Vinylmethyl Methylvinylacetat-Copolymer; Vinylmethylether/Maleinsäure-Copolymer; Poly(2-acrylamido-2-methylpropansulfonsäure); Poly(diethylentriamin-coadipinsäure) Säure); Polyvinylpyridin; Polyvinylimidazol; mit Epichlorhydrin modifiziertes Polyethylenimin; Polyethylenimin ethoxyliert; etherbindungshaltige Polymere wie Polyethylenoxid (PEO), Polypropylenoxid (PPO), Polyethylenglykol (PEG) und Polyethylen Glykol (PEG) und Polyvinylether (PVE); Polyurethan; Melaminharze; Gelatine; Carrageenan; Dextran. Ein bevorzugtes Polymer für die ist ein Polyvinylalkohol (PVA), ein Vinylalkohol-Copolymer oder modifizierter Polyvinylalkohol. Der modifizierte Polyvinylalkohol kann ein kationischer Polyvinylalkohol sein.

Die Primermischung kann weitere Zusatzstoffe enthalten, wie Farbstoffe (z.B. TiO2 als Weißpigment), Tenside, Biozide, Antistatika, Elastomere, UV-Absorber, Weichmacher, Lichtstabilisatoren, pH-Einstellmittel, Antistatika, Bleichmittel, Mattierungsmittel und dergleichen. So können als weitere Bestandteile von Primermischungen 2-Methyl-2H-isothiazol-3-on und/oder 5-Chlor-2-methyl-2H-isothiazol-3-on zugegeben werden, die jedoch bevorzugt in nur geringen Mengen von weniger als 0,005 Gew% enthalten sind.

Wie oben ausgeführt, wird von jeder zu vermessenden Probe ein Röntgenfluoreszenzspektrum aufgenommen. Bevorzugt wird ein Gesamtspektrum aufgenommen, so dass neben dem ausgewählten zweiwertigen Kation auch weitere Elemente der Primerzusammensetzung bestimmt werden können. So kann es z.B. wünschenswert sein, neben dem zweiwertigen Kationsalz auch höherwertige Salze oder Oxide wie z.B. TiO₂ zu bestimmen.

Hierzu wird die zu vermessende Probe zunächst angeregt (z.B. durch Elektronenstoß) und die von dem angeregten Element emittierte Röntgenstrahlung wird bestimmt. Im vorliegenden Verfahren weist die emittierte Röntgenstrahlung eine Energie in einem Bereich zwischen 2 000 und 6000 eV auf.

Im Falle der Bestimmung der Menge an Ca²⁺ als Indikator für die Primerauftragsmenge wird ein Energiebereich zwischen 3600 und 3800 eV, bevorzugt 3620 und 3770 eV analysiert. In einer bevorzugten Ausführungsform liegt der Energiebereich für Ca²⁺ bei einer Anfangsenergie von 3627 eV und einer Endenergie von 3763 eV. Im Falle von TiO₂ würde z.B. ein Energiebereich zwischen 4200 und 4700 eV analysiert werden.

Die elementspezifisch abgegebene Röntgenstrahlung wird in Form von Impulsen bzw. Counts angezeigt. Die Stärke bzw. Höhe der abgegebenen Counts ist dabei proportional zur Auftragsmenge des Primers. Die vom Detektor detektierten Counts entsprechen der Menge, der nach der Bestrahlung der Probe mit energiereicher Strahlung freigesetzten Photonen.

In einer Ausführungsform des vorliegenden Verfahrens wird der mindestens eine Primer als flüssige Suspension bzw. Lösung mit einem Feststoffgehalt von 15 bis 30 Gew%, bevorzugt 20 bis 25 Gew% auf das mindestens eine Trägermaterial aufgebracht. Der Primerauftrag kann mit einer Rasterwalze oder mittels Aufsprühens erfolgen.

In einer weiteren Ausführungsform des vorliegenden Verfahrens wird der Primerauftrag getrocknet und anschließend das Röntgenfluoreszenzspektrum unter Verwendung des mindestens einen Röntgenfluoreszenz-Messkopfes aufgenommen.

In einer Ausführungsform des vorliegenden Verfahrens beträgt die Menge an auf das mindeste eine Trägermaterial aufgebrachten Primer mehr als 0,5 g fest/m², bevorzugt mehr als 1 g fest/m². So kann die Menge des aufgetragenen Primers zwischen 0,5 g fest/m² und 10 g fest/m², bevorzugt zwischen 1 g fest/m² und 8 g fest/m², insbesondere zwischen 1,5 g fest/m² und 5 g fest/m² liegen.

Das mindestens eine Trägermaterial, das mit dem Primer beschichtet wird, kann vorliegend eine Papierlage oder eine Holzwerkstoffplatte sein.

Bevorzugt ist die Verwendung einer Papierlage, insbesondere einer Papierlage aus mindestens einem Rohpapier oder mindestens einem vorbehandelten imprägnierten Papier.

So ist das mindestens eine zu bedruckende Trägermaterial in einer Ausführungsform mindestens ein Rohpapier. Unter Rohpapieren sind dabei solche Papiere zu verstehen, die weder einer Leimung in der Masse noch eine Imprägnierung der Oberfläche mit einem Harz oder Leim ausgesetzt waren. Rohpapiere bestehen im Wesentlichen aus Zellstoffen, Pigmenten und Füllstoffen und üblichen Additiven. Zur Herstellung der von Rohpapieren wie zum Beispiel Dekorpapieren können Nadelholz-Zellstoffe, Laubholz-Zellstoffe, oder Mischungen beider Zellstoffarten verwendet werden. Zur Einfärbung der Rohpapier können anorganische Farbpigmente wie Metalloxide, Metall Hydroxide und Metalloxid Hydrate, Metall Sulfide, Metallsulfate, Metallchromate und Metallmolybdate sowie organische Farbpigmente und/oder Farbstoffe wie zum Beispiel Carbonylfarbmittel, Cyaninfarbmittel und andere eingesetzt werden.

In einer bevorzugten Ausführungsform ist das vorliegend zu bedruckende Rohpapier mindestens eine Papierbahn ohne Imprägnierung.

In einer weiteren Ausführungsform ist das mindestens eine zu bedruckende Trägermaterial mindestens ein vorbehandeltes, imprägniertes Papier. Unter einem vorbehandelten Papier (oder Zelluloselage) ist dabei ein Papier oder eine Papierbahn zu verstehen, die mit einer Harzlösung imprägniert ist. Das Papier kann mit verschiedensten Harzlösung getränkt sein, beispielsweise Melaminharze und Harnstoffharze, Kunststoff-Acrylat-Verbindungen oder Stärke-Beleimung. Es können auch Gemische der Harze vorliegen. Es ist auch möglich, das Papier unter Verwendung von Harzpulver zu imprägnieren. Die Verwendung von Harzpulver ist weiter unten im Detail beschrieben.

In einer bevorzugten Ausführungsvariante wird ein imprägniertes Papier verwendet, welches mit den folgenden Verfahrensschritten (siehe auch EP 2 980 313 A1) bereitgestellt wird: a) vollständiges Tränken der Zelluloselage mit einem härtbaren Harz, z.B. MelaminFormaldehydharz), b) Entfernen des sich auf der Oberfläche ausbildenden überschüssigen Harzes (z.B. durch Abziehen oder Abrakeln), c) Trocknen der getränkten Zelluloselage derart, dass nach dem Verdunsten des Wassers aus dem Harz die Zellulosefaser auf der Oberfläche, von der das Harz entfernt wurde zumindest teilweise freiliegen.

Durch das Abziehen oder Abrakeln schließt das auf der Oberfläche der Zelluloselage verbleibende Harz mit den Faserspitzen ab. Im Trocknungsprozess zieht sich das Harz in die Fasern zurück, so dass die Fasern mit dem Harz getränkt sind aber nicht vom Harz eingeschlossen. Eine derartige Oberfläche ist zum Bedrucken mit wässrigen Digitaldrucktinten geeignet.

Die für das Abziehen bzw. Abrakeln verwendete Spezialeinrichtung funktioniert ähnlich wie eine Spachtelmaschine bei der eine oder mehrere Walzen auf dem Papier rückwärts laufen und das überschüssige Harz aufnehmen. Durch unterschiedliche Geschwindigkeiten der Walzen kann die Menge genau gesteuert und eine Wiederholbarkeit gewährleistet werden.

Die Papiergewichte können über einen Bereich zwischen 30 und 250 g/m² variieren. So kann das Papiergewicht z.B. von Dekorpapieren zwischen 30 und 150 g/m², bevorzugt zwischen 50 und 120 g/m², insbesondere bevorzugt zwischen 80 und 100 g/m² liegen. Im Falle eine Rohpapiers oder Kraftpapiers kann das Papiergewicht zwischen 50 and 250 g/m², bevorzugt zwischen 100 und 200 g/m², insbesondere zwischen 120 and 150 g/m² betragen.

Wie erwähnt, ist es auch möglich, eine Holzwerkstoffplatte als mit einem Primer zu beschichtendes Trägermaterial vorzusehen. In diesem Fall kann die Holzwerkstoffplatte eine Span-, mitteldichte Faser (MDF)-, hochdichte Faser (HDF)-, Orientierte Grobspan(OSB)- oder Sperrholzplatte, einem Holzwerkstoff-Kunststoff-Gemisch oder einem Verbundwerkstoff, oder eine WPC-Platte (Wood Plastic Composites) sein.

Das vorliegende Verfahren wird in der Produktionslinie umfassend mindestens einen Röntgenfluoreszenz-Messkopf und mindestens ein Steuerungssystem kontinuierlich und online durchgeführt. Es können auch zwei oder drei Röntgenfluoreszenz-Messköpfe an unterschiedlichen Stellen in der Produktionslinie vorgesehen sein. Eine solche Produktionslinie kann eine Produktionslinie zur Bearbeitung bzw. Veredlung von Papierlagen oder Werkstoffplatten sein.

Die Produktionslinie umfasst:
- mindestens ein Auftragswerk zum Auftragen des Primers auf das mindestens eine Trägermaterial,
- mindestens einen nach dem Auftragswerk vorgesehenen Röntgenfluoreszenz-Messkopf;
sowie optional außerdem:
- mindestens einen nach dem Auftragswerk angeordneten Trockner,
- mindestens einen nach dem Trockner vorgesehenen Röntgenfluoreszenz-Messkopf;
- mindestens eine Druckvorrichtung zum Bedrucken des primerbeschichteten Trägermaterials,
- weitere Auftragswerke mit jeweils korrespondierenden Trocknern zum Auftragen und Trocknen von mindestens einer, bevorzugt mehrerer Harzschichten auf das bedruckte Trägermaterial.

In einer Ausführungsform umfasst die Produktionslinie:
- mindestens ein Auftragswerk mit Rasterwalze zum Auftragen des Primers auf das mindestens eine Trägermaterial,
- Optional mindestens ein nach dem Auftragswerk vorgesehener Röntgenfluoreszenz-Messkopf;
- mindestens ein nach dem Auftragswerk angeordneter Trockner,
- mindestens ein nach dem Trockner vorgesehener Röntgenfluoreszenz-Messkopf;
- mindestens ein Digitaldrucker zum Bedrucken des primerbeschichteten Trägermaterials,
- weitere Auftragswerke mit jeweils korrespondierenden Trocknern zum Auftragen und Trocknen von mindestens einer, bevorzugt mehrerer Harzschichten auf dem bedruckten Trägermaterial.

Das Steuerungssystem der Produktionslinie umfasst erfindungsgemäß mindestens eine computergestützte Auswerteeinheit (bzw. Prozessoreinheit) und eine Datenbank. In der Auswerteeinheit erfolgt der Abgleich bzw. Vergleich des für das primerbeschichtete Trägermaterial gemessene Röntgenfluoreszenzspektrum mit dem erstellten Kalibriermodell. Die so bestimmten Daten werden in der Datenbank gespeichert.

Die mit dem vorliegenden spektroskopischen Verfahren bestimmten Daten können zur Steuerung der Produktionslinie verwendet werden. Die berührungslos gemessenen Parameterwerte des Röntgenfluoreszenz-Messkopf können, wie zuvor bereits beschrieben, direkt und in "real time" für die Steuerung bzw. Regelung der betreffenden Anlage verwendet werden, indem beispielsweise die gemessenen und in der Datenbank, z.B. einer relationalen Datenbank, Ist-Werte gespeichert und mit dort vorhandenen Soll-Werten dieser Parameter verglichen werden. Die sich ergebenden Differenzen werden anschließend zur Steuerung bzw. Regelung der Produktionslinie verwendet.

In einer Ausführungsform wird insbesondere das Primerauftragswerk und der sich anschließende Trockner gesteuert. Ergeben die durch den aufgenommenen Röntgenfluoreszenz-Messkopf und in der Auswerteeinheit ermittelten Werte eine Störung im Primerauftrag, können Verfahrensschritte gezielt beeinflusst werden bzw. Mängel behoben werden.

So kann der Anpressdruck der Auftragsrolle des Primerauftragswerkes gezielt gesteuert werden, um so Unregelmäßigkeiten in der Oberfläche des Trägermaterials auszugleichen. Ein fehlerhafter Auftrag kann sich auch durch Beschädigungen der Auftragswalze ergeben; die Auftragswalze kann entsprechend ausgewechselt werden und/oder behoben werden. Eine weitere Ursache für einen fehlerhaften Primerauftrag kann auch durch einen leeren Primer Behälter oder einen defekten Trockner begründet sein. Mit dem vorliegenden Verfahren können diese Mängel leicht und schnell behoben werden.

Für den Abgleich und die Steuerung der Produktionslinie wird ein computerimplementiertes Verfahren sowie ein Computerprogramm umfassend Befehle, die bei der Ausführung des Programms durch einen Computer diesen veranlassen das computerimplementierte Verfahren auszuführen, bereitgestellt. Das Computerprogramm ist in einer Speichereinheit des Steuerungssystems der Produktionslinie gespeichert.

Die Erfindung wird nachfolgend unter Bezugnahme auf die Figuren der Zeichnungen an einem Ausführungsbeispiel näher erläutert. Es zeigt:

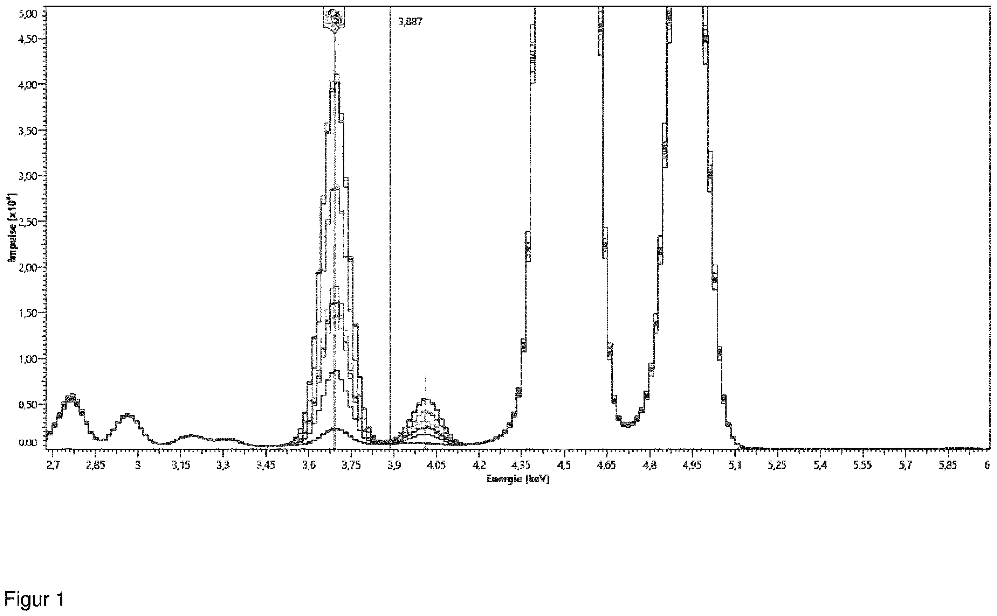

- Figur 1: ein Röntgenfluoreszenzspektrum einer mit einem Primer beschichteten Trägermaterials und eines Trägermaterials ohne Primerbeschichtung.

### Kalibrierung

Aus dem Diagramm der Figur 1 ist ein typisches Röntgenfluoreszenz-Spektrum einer auf eine Rohpapierlage aufgetragene Primerschicht entnehmbar. Der verwendete Primer enthält Ca²⁺ in Form von Calciumformiat.

Die Proben wurden vorliegend mit Strahlen in einem Energiebereich von 2 keV bis 5,6 eV bestrahlt und die abgegebene Röntgenstrahlung als Impulse bzw. Counts bestimmt.

Für die Aufnahmen der Röntgenfluoreszenz Spektren wurde ein Röntgenfluoreszenz-Messkopf der Firma Spektro. verwendet. Der Messkopf ist ein Silizium-Drift- oder Silizium-PIN-Detektor. Der Detektor wird anwendungsspezifisch gewählt. Bei der Messung ist auf einen kurzen Abstand zwischen Messkopf und zu vermessender Probe zu achten. Bevorzugt sollte dieser Abstand nur wenige Millimeter betragen.

Zur Kalibrierung wurden verschiedene Primermengen (0 g/m²; 1,1 g/m²; 2,2 g/m²; 3,3 g/m²) aufgetragen und vermessen. Es wurden jeweils drei Messungen pro Primermenge durchgeführt, und zwar jeweils an drei verschiedenen Messpunkten auf der primerbeschichteten Rohpapierlage: A-Seite (AS), B-Seite (BS), und mittig (Mitte). Zur Kontrolle wurde ebenfalls jeweils die Rückseite (rueck) gemessen.

Die verschiedenen Messungen sind als Peaks in dem Röntgenfluoreszenz-Spektrum der Figur 1 jeweils dargestellt. Das für das Ca²⁺ Kation typische Signal liegt in einem Bereich zwischen 3,6 und 3,8 keV. Deutlich erkennbar ist, dass ein primerbeschichtetes Papier deutlich erhöhte Impulse gegenüber einem unbeschichteten Papier aufweist. So erreichen die Peaks für die mit 3,3 g/m² Primer beschichtete Probe maximale Werte von 4 000 Impulsen (auf der x-Achse) auf, während die Nullproben bei 700 Impulsen liegen.

Die Integrale der Peaks werden als Counts angegeben. In Tabelle 1 sind jeweils die Einzelwerte und Mittelwerte der Counts aus den drei jeweiligen Messungen je Primermenge angeführt.

**Tabelle 1: Korrelation von Primermenge und Counts der detektierten RöntgenfluoreszenzstrahlenAus den Mittelwerten wird eine Ausgleichsgerade erstellt, auf deren Grundlage die Primermenge der zu vermessenden Proben bestimmt werden kann.**

| Primermenge (g/m²) | Probenbezeichnung | Counts | Counts (Mittelwert) |
|---|---|---|---|
| 0 | Blindprobe 2 vorne | 25542 | 25149 |
| 0 | Blindprobe 1 vorne | 24756 | |
| 0 | Blindprobe 2 Rueck | 24567 | 24557 |
| 0 | Blindprobe 1 Rueck | 24547 | |
| 1,1 | Durchlauf 1 AS | 128501 | 124831 |
| 1,1 | Durchlauf 1 BS | 127764 | |
| 1,1 | Durchlauf 1 mitte | 118229 | |
| 1,1 | Durchlauf 1 BS rueck | 72191 | |
| 2,2 | Durchlauf 2 AS | 223821 | 224624 |
| 2,2 | Durchlauf 2 BS | 224051 | |
| 2,2 | Durchlauf 2 mitte | 226000 | |
| 3,3 | Durchlauf 3 AS | 306453 | 310012 |
| 3,3 | Durchlauf 3 BS | 314678 | |
| 3,3 | Durchlauf 3 mitte | 308906 | |
| 3,3 | Durchlauf 3 AS rueck | 140647 | |

### Beispiel 1:

In einer Papierdigitaldruckanlage wird unbehandeltes Rohpapier in einem ersten Schritt mit einer Grundierung (Primer) versehen, um eine Verbindung zwischen dem Papier und der Tinte zu schaffen. Der Primer wird mithilfe einer Rasterwalze auf das Papier aufgetragen und anschließend sofort getrocknet. Hinter dem Trockner befindet sich ein traversierender Röntgenfluoreszenz-Messkopf, dass die Primermenge bestimmt. Es fährt innerhalb von X Sekunden die gesamte Bahnbreite von Y m ab. Nach einer Wartung am Primerauftragswerk wird die Anlage testweise laufen gelassen. Nach einer Minute ertönt ein Warnton und eine Signalleuchte blinkt. Die Anlagenfahrer stoppen die Anlage manuell. Die Messwerte zeigen, dass der Primerauftrag auf der linken Seite deutlich unter dem Soll liegt. Das Primerauftragswerk wird daraufhin nochmals kontrolliert. Es zeigt sich, dass es Differenzen im Anpressdruck zwischen den Seiten gab. Nachdem das Problem behoben wurde, läuft die Anlage ohne Probleme weiter.

### Beispiel 2:

In einer Papierdigitaldruckanlage wird Rohpapier in einem ersten Schritt mit einem Primer versehen, um eine Verbindung zwischen dem Papier und der Tinte zu schaffen. Der Primer wird mithilfe einer Rasterwalze auf das Papier aufgetragen und anschließend sofort getrocknet. Hinter dem Trockner befindet sich über die Bahnbreite gleichmäßig verteilt 3 Röntgenfluoreszenz-Messköpfe, die die Primermenge bestimmen. Während des Produktionsauftrags eines Dekors stoppt die Anlage und ein Signal (akustisch und visuell) erscheint. Grund dafür ist ein gestörter Auftrag des Primers auf der rechten Seite. Der Röntgenfluoreszenz-Messkopf ermittelt an dieser Stelle einen um 30% niedrigeren Primerauftrag als auf der linken Seite und der Mitte. Bei der Kontrolle des Auftragswerks zeigt sich, dass es auf der rechten Seite der Primerwalze Beschädigungen zu erkennen sind. Das Rakel hat die Näpfchen beschädigt und somit wurde die Auftragsmenge verringert.

### Beispiel 3:

In einer Papierdigitaldruckanlage wird Rohpapier in einem ersten Schritt mit einem Primer versehen, um eine Verbindung zwischen dem Papier und der Tinte zu schaffen. Der Primer wird mithilfe einer Rasterwalze auf das Papier aufgetragen und anschließend sofort getrocknet. Hinter dem Trockner befindet sich ein festinstallierter Röntgenfluoreszenz-Messkopf. Während eines Großauftrags über 15 Tonnen, wird ein Signal (akustisch/visuell) von der Anlage ausgesandt. Die Anlage stoppt automatisch. Der Röntgenfluoreszenz-Messkopf ermittelt einen Primerauftrag von 0 g/m². Die Anlagenfahrer stellen daraufhin fest, dass der Primer-IBC leer ist und kein neuer Behälter anschlossen wurde.

## Patentansprüche

1. Produktionslinie zum Auftragen von mindestens einer Primerschicht als Druckgrundierung auf ein Trägermaterial,
wobei die Produktionslinie umfasst:
- mindestens ein Auftragswerk zum Auftragen des Primers auf das mindestens eine Trägermaterial,
- mindestens einen Röntgenfluoreszenz-Messkopf zur Aufnahme von mindestens einem Röntgenfluoreszenzspektrum der auf das Trägermaterial aufgetragenen Primerschicht, wobei die emittierte Röntgenstrahlung Energie in einem Bereich zwischen 2000 und 6000 eV umfasst,
- mindestens ein Steuerungssystem zur Steuerung der Produktionslinie, wobei das Steuerungssystem der Produktionslinie mindestens eine computergestützte Auswerteeinheit und eine Datenbank umfasst,
- wobei die Auswerteeinheit konfiguriert ist, das für das primerbeschichtete Trägermaterial gemessene Röntgenfluoreszenzspektrum mit einem erstellten Kalibriermodell abzugleichen;
- wobei die Datenbank konfiguriert ist, die so bestimmten Daten zu speichern,
- wobei das Steuerungssystem konfiguriert ist, die bestimmten Daten zur Steuerung der Produktionslinie zu verwenden,
wobei die Auswerteeinheit konfiguriert ist, das Kalibriermodell anhand von durch den Röntgenfluoreszenz-Messkopf zu vermessenen Referenzproben wie folgt zu bestimmen:
- Bereitstellen von mehreren Referenzproben durch Aufbringen von mindestens einem Primer in jeweils unterschiedlich quantitativ definierten Mengen auf das mindestens eine Trägermaterial;
- Aufnahme von mindestens einem Röntgenfluoreszenzspektrum von jeder der Referenzproben unter Verwendung von mindestens einem Röntgenfluoreszenz-Messkopf in einem für das in dem Primer enthaltende jeweils zu detektierende zweiwertige Kation Energiebereich, wobei die emittierte Röntgenstrahlung Energie in einem Bereich zwischen 2000 und 6000 eV umfasst,
- Zuordnen der unterschiedlichen quantitativen definierten Mengen an Primer der Referenzproben zu den aufgenommenen Röntgenfluoreszenzspektren der genannten Referenzproben; und
- Erstellen eines Kalibriermodells für den Zusammenhang zwischen den aufgenommenen Röntgenfluoreszenzspektren der Referenzproben und den dazugehörigen quantitativ definierten Mengen an Primer.

2. Produktionslinie nach Anspruch 1, **dadurch gekennzeichnet, dass** die Produktionslinie des Weiteren umfasst:
- mindestens ein nach dem Auftragswerk angeordneter Trockner,
- wobei der mindestens eine Röntgenfluoreszenz-Messkopf nach dem mindestens einen Trockner vorgesehen ist,
- mindestens eine Druckvorrichtung zum Bedrucken des primerbeschichteten Trägermaterials,
- weitere Auftragswerke mit jeweils korrespondierenden Trocknern zum Auftragen und Trocknen von mindestens einer, bevorzugt mehrerer Harzschichten auf das bedruckte Trägermaterial.

3. Produktionslinie nach Anspruch 2, **dadurch gekennzeichnet, dass** das Steuerungssystem der Produktionslinie konfiguriert ist, die bestimmten Daten zur Steuerung des Primerauftragwerkes und des sich anschließenden Trockners zu verwenden.

4. Produktionslinie nach einem der vorhergehenden Ansprüche, **dadurch gekennzeichnet, dass** das zu detektierende zweiwertige Kation, Mg²⁺, Ca²⁺, Sr²⁺, Ba²⁺ bevorzugt Ca²⁺ umfasst.

5. Produktionslinie nach einem der vorhergehenden Ansprüche, **dadurch gekennzeichnet, dass** das zweiwertige Kation in Form von Calciumdiformiat, Calciumcarbonat oder Calciumsulfat im Primer verwendet wird.

6. Produktionslinie nach einem der vorhergehenden Ansprüche, **dadurch gekennzeichnet, dass** im Falle der Bestimmung der Menge an Ca²⁺ als zweiwertigem Kation ein Energiebereich des Röntgenfluoresenzspektrums zwischen 3600 und 3800 eV, bevorzugt 3620 und 3770 eV analysiert wird.

7. Produktionslinie nach einem der vorhergehenden Ansprüche, **dadurch gekennzeichnet, dass** der mindestens eine Primer als flüssige Suspension bzw. Lösung mit einem Feststoffgehalt von 15 bis 30 Gew%, bevorzugt 20 bis 25 Gew% auf das mindestens eine Trägermaterial aufgebracht wird.

8. Produktionslinie nach einem der vorhergehenden Ansprüche, **dadurch gekennzeichnet, dass** die Menge an auf das mindeste eine Trägermaterial aufgebrachten Primer mehr als 0,5 g/m², bevorzugt mehr als 1 g/m² beträgt.

9. Produktionslinie nach einem der vorhergehenden Ansprüche, **dadurch gekennzeichnet, dass** das mindestens eine Trägermaterial mindestens eine Papierlage, insbesondere mindestens ein Rohpapier oder mindestens ein vorbehandeltes, imprägniertes Papier, umfasst.

10. Produktionslinie nach einem der vorhergehenden Ansprüche, **dadurch gekennzeichnet, dass** das mindestens eine Trägermaterial eine Platte aus einem Holzwerkstoff, insbesondere eine Span-, mitteldichte Faser (MDF)-, hochdichte Faser (HDF)-, Orientierte Grobspan(OSB)- oder Sperrholzplatte, einem Holzwerkstoff-Kunststoff-Gemisch oder einem Verbundwerkstoff, oder eine WPC-Platte (Wood Plastic Composites) ist.

11. Produktionslinie nach einem der vorhergehenden Ansprüche, **dadurch gekennzeichnet, dass** die Produktionslinie konfiguriert ist, so dass die Bestimmung der aufgetragenen Primermenge kontinuierlich und online erfolgt.

## Claims

1. A production line for applying at least one primer layer as a printing primer to a substrate,
wherein the production line comprises
- at least one application unit for applying the primer to the at least one carrier material,
- at least one X-ray fluorescence measuring head for recording at least one X-ray fluorescence spectrum of the primer layer applied to the carrier material, wherein the emitted X-ray radiation comprises energy in a range between 2000 and 6000 eV,
- at least one control system for controlling the production line, wherein the control system of the production line comprises at least one computerized evaluation unit and a database,
- wherein the evaluation unit is configured to compare the X-ray fluorescence spectrum measured for the primer-coated carrier material with a calibration model that has been created;
- wherein the database is configured to store the data thus determined,
- wherein the control system is configured to use the determined data to control the production line,
wherein the evaluation unit is configured to determine the calibration model based on reference samples to be measured by the X-ray fluorescence measuring head as follows:
- providing several reference samples by applying at least one primer in different quantitatively defined amounts to the at least one carrier material;
- recording at least one X-ray fluorescence spectrum of each of the reference samples using at least one X-ray fluorescence measuring head in an energy range for the respective divalent cation to be detected contained in the primer, wherein the emitted X-rays comprise energy in a range between 2000 and 6000 eV,
- assigning the different quantitatively defined amounts of primer of the reference samples to the recorded X-ray fluorescence spectra of said reference samples; and
- creating a calibration model for the relationship between the recorded X-ray fluorescence spectra of the reference samples and the associated quantitatively defined amounts of primer.

2. Production line according to claim 1, **characterized in that** the production line further comprises
- at least one dryer arranged downstream of the applicator,
- wherein the at least one X-ray fluorescence measuring head is provided after the at least one dryer,
- at least one printing device for printing the primer-coated carrier material,
- further application units each with corresponding dryers for applying and drying at least one, preferably several, resin layers on the printed carrier material.

3. Production line according to claim 2, **characterized in that** the control system of the production line is configured to use the determined data to control the primer application unit and the subsequent dryer.

4. Production line according to one of the preceding claims, **characterized in that** the divalent cation to be detected comprises Mg²⁺, Ca²⁺, Sr²⁺, Ba²⁺, preferably Ca²⁺.

5. Production line according to one of the preceding claims, **characterized in that** the divalent cation is used in the primer in the form of calcium diformate, calcium carbonate or calcium sulfate.

6. Production line according to one of the preceding claims, **characterized in that**, in the case of determining the amount of Ca²⁺as divalent cation, an energy range of the X-ray fluorescence spectrum between 3600 and 3800 eV, preferably 3620 and 3770 eV, is analyzed.

7. Production line according to one of the preceding claims, **characterized in that** the at least one primer is applied to the at least one carrier material as a liquid suspension or solution with a solids content of 15 to 30% by weight, preferably 20 to 25% by weight.

8. Production line according to one of the preceding claims, **characterized in that** the amount of primer applied to the at least one carrier material is more than 0.5 g/m², preferably more than 1 g/m².

9. Production line according to one of the preceding claims, **characterized in that** the at least one carrier material comprises at least one paper layer, in particular at least one base paper or at least one pre-treated, impregnated paper.

10. Production line according to one of the preceding claims, **characterized in that** the at least one carrier material is a board made of a wood-based material, in particular a chipboard, medium-density fibre (MDF), high-density fibre (HDF), oriented strand board (OSB) or plywood board, a wood-based material/plastic mixture or a composite material, or a WPC board (wood plastic composites).

11. Production line according to one of the preceding claims, **characterized in that** the production line is configured so that the determination of the amount of primer applied takes place continuously and online.

## Revendications

1. Ligne de production pour l'application d'au moins une couche de primaire comme apprêt d'impression sur un matériau de support,
dans laquelle la ligne de production comprend :
- au moins un mécanisme d'application pour appliquer le primaire sur l'au moins un matériau de support,
- au moins une tête de mesure par fluorescence X pour enregistrer au moins un spectre de fluorescence X de la couche de primaire appliquée sur le matériau de support, dans laquelle le rayonnement X émis comprend de l'énergie située dans une plage entre 2000 et 6000 eV,
- au moins un système de commande pour commander la ligne de production, dans laquelle le système de commande de la ligne de production comprend au moins une unité d'évaluation assistée par ordinateur et une base de données,
- dans laquelle l'unité d'évaluation est configurée pour comparer le spectre de fluorescence X mesuré pour le matériau de support revêtu du primaire à un modèle d'étalonnage créé ;
- dans laquelle la base de données est configurée pour stocker les données ainsi déterminées,
- dans laquelle le système de commande est configuré pour utiliser les données déterminées pour commander la ligne de production,
dans laquelle l'unité d'évaluation est configurée pour déterminer le modèle d'étalonnage à l'aide d'échantillons de référence mesurés par la tête de mesure de fluorescence X comme suit :
- en fournissant plusieurs échantillons de référence par application d'au moins un primaire en quantités quantitativement différentes sur l'au moins un matériau de support ;
- en enregistrant au moins un spectre de fluorescence X de chacun des échantillons de référence en utilisant au moins une tête de mesure de fluorescence X dans une plage d'énergie adaptée au cation bivalent à détecter contenu dans le primaire, dans laquelle le rayonnement X émis comprend une énergie dans une plage entre 2000 et 6000 eV,
- en affectant les quantités quantitativement différentes de primaire des échantillons de référence aux spectres de fluorescence X enregistrés desdits échantillons de référence ; et
- en créant un modèle d'étalonnage pour la relation entre les spectres de fluorescence X enregistrés des échantillons de référence et les quantités de primaire définies quantitativement correspondantes.

2. Ligne de production selon la revendication 1, **caractérisée en ce que** la ligne de production comprend en outre :
- au moins un dispositif de séchage disposé en aval du mécanisme d'application,
- dans laquelle au moins une tête de mesure par fluorescence X est prévue après au moins un dispositif de séchage,
- au moins un dispositif d'impression pour imprimer le matériau de support revêtu du primaire,
- d'autres mécanismes d'application avec des dispositifs de séchage correspondants pour l'application et le séchage d'au moins une, de préférence plusieurs couches de résine sur le matériau de support imprimé.

3. Ligne de production selon la revendication 2, **caractérisée en ce que** le système de commande de la ligne de production est configuré pour utiliser les données déterminées pour commander le mécanisme d'application de primaire et le dispositif de séchage s'y raccordant.

4. Ligne de production selon l'une quelconque des revendications précédentes, **caractérisée en ce que** le cation bivalent à détecter comprend Mg²⁺, Ca²⁺, Sr²⁺, Ba²⁺ et de préférence Ca²⁺.

5. Ligne de production selon l'une quelconque des revendications précédentes, **caractérisée en ce que** le cation bivalent est utilisé sous forme de diformiate de calcium, de carbonate de calcium ou de sulfate de calcium dans le primaire.

6. Ligne de production selon l'une quelconque des revendications précédentes, **caractérisée en ce qu'**en cas de détermination de la quantité de Ca²⁺ en tant que cation bivalent, une plage d'énergie du spectre de fluorescence X comprise entre 3600 et 3800 eV, de préférence 3620 et 3770 eV, est analysée.

7. Ligne de production selon l'une quelconque des revendications précédentes, **caractérisée en ce que** l'au moins un primaire est appliqué sous forme de suspension liquide ou de solution avec une teneur en solides de 15 à 30 % en poids, de préférence de 20 à 25 % en poids, sur l'au moins un matériau de support.

8. Ligne de production selon l'une quelconque des revendications précédentes, **caractérisée en ce que** la quantité de primaire appliqué sur l'au moins un matériau de support est supérieure à 0,5 g/m², de préférence supérieure à 1 g/m².

9. Ligne de production selon l'une quelconque des revendications précédentes, **caractérisée en ce que** l'au moins un matériau de support comprend une couche de papier, en particulier au moins un papier brut ou au moins un papier imprégné prétraité.

10. Ligne de production selon l'une quelconque des revendications précédentes, **caractérisée en ce que** l'au moins un matériau de support est un panneau en matériau dérivé du bois, en particulier un panneau de particules, en fibres de moyenne densité (MDF), en fibres de haute densité (HDF), en panneaux de copeaux orientés (OSB) ou en contreplaqué, un mélange matériau dérivé du bois-plastique ou un matériau composite, ou un panneau WPC (composites bois-plastique).

11. Ligne de production selon l'une quelconque des revendications précédentes, **caractérisée en ce que** la ligne de production est configurée de telle sorte que la détermination de la quantité de primaire appliqué a lieu en continu et en ligne.
